# FASCICULE DE BREVET EUROPEEN

(11) **EP 1 292 488 B1**
(45) Date de publication et mention de la délivrance du brevet: **06.08.2008**
(21) Numéro de dépôt: 01943597.3
(22) Date de dépôt: 12.06.2001
(51) Int. Cl.: B62K 21/02, B62K 25/04

(54) **ELEMENT SUPPORT DE ROUE DE BICYCLETTE, ET MOYEN AMORTISSEUR DE VIBRATIONS POUR UN TEL ELEMENT SUPPORT**
RADTRÄGERVORRICHTUNG UND VIBRATIONSDÄMPFER FÜR EINE SOLCHE VORRICHTUNG
BICYCLE WHEEL SUPPORT ELEMENT, AND VIBRATION DAMPING MEANS FOR SAME

(30) Priorité: 16.06.2000 FR 0007668
(43) Date de publication de la demande: 19.03.2003
(73) Titulaire: TIME SPORT INTERNATIONAL, 58 640 Varennes-Vauzelles (FR)
(72) Inventeur: ROUSSIN-BOUCHARD, Xavier, F-38140 LA MURETTE (FR); GUEUGNEAUD, Jean-Marc, F-38110 ST CLAIR DE LA TOUR (FR)
(74) Mandataire: Michardière, Bernard
(86) Numéro de dépôt international: PCT/FR2001/001805
(87) Numéro de publication internationale: WO 2001/096173

(56) Documents cités:
- EP-A- 0 531 233
- FR-A- 2 706 319
- US-A- 5 183 281
- US-A- 6 109 637

## Description

L'invention est relative à un élément support de roue de bicyclette, à une extrémité duquel peut être monté un axe de roue .

Un tel élément support de roue peut être constitué par une fourche avant de bicyclette comportant un pivot de direction solidaire vers le bas d'au moins un fourreau à l'extrémité duquel peut être monté un axe pour supporter une roue, ou par au moins un hauban supportant la roue arrière.

L'invention concerne plus particulièrement, mais non exclusivement, un élément support de roue réalisé, au moins en partie, en matériau composite. Par l'expression "matériau composite" on désigne un matériau constitué de fibres à haute résistance mécanique, en particulier de fibres de carbone, noyées dans une résine, du type époxy ou polyester ou analogue, polymérisée.

Les roues d'une bicyclette sont soumises, lors du roulement, à des efforts et à des chocs aussi bien verticaux que longitudinaux et transversaux, notamment en raison de la granulosité de la route, d'inégalités du sol ou d'obstacles rencontrés . Il en résulte des vibrations au niveau du ou des fourreaux de la fourche avant et/ou du ou des haubans arrière.

De telles vibrations sont désagréables et néfastes pour l'utilisateur ; elles peuvent induire chez le cycliste des troubles de santé, tels que périarthrites. De plus, ces vibrations sont nuisibles quant à la résistance mécanique des éléments supports de roue.

Des systèmes de suspension ont déjà été proposés, mais ils sont lourds et volumineux, et nécessitent généralement plusieurs pièces pour réaliser les fourreaux ou les haubans .

Dans le cas d'une bicyclette, notamment pour la route, on cherche à réduire le poids de sorte que les systèmes de suspension proposés à ce jour ne sont pas entièrement satisfaisants de ce point de vue.

On connaît d'après EP-B-0 531 233 un dispositif amortisseur de vibrations pour club de golf comprenant un manchon tubulaire relié au manche du club de golf par un matériau viscoélastique. Le manchon entoure complètement le manche du club.

On connaît d'après FR-A-2 706 319 un dispositif amortisseur de vibrations pour ski comprenant une couche de matériau viscoélastique collée sur la face supérieure du ski et recouverte d'une plaque de contrainte, sensiblement plane, réalisée en matériau rigide.

Ces deux documents concernent des domaines techniques différents de celui de l'invention et les problèmes de mise en place simple et rapide et de poids réduit d'un amortisseur de vibrations pour élément support de roue de bicyclette ne sont pas évoqués, ni suggérés.

L'invention a pour but, principalement, de fournir un élément support de roue de bicyclette dans lequel les vibrations lors du roulement sont réduites et ceci sans entraîner une augmentation sensible de poids et/ou une construction compliquée.

Belon l'invention, un élément support de roue de bicyclette est caractérisé par le fait qu'il comporte un moyen amortisseur de vibrations ayant une forme sensiblement en secteur cylindrique, concave vers l'intérieur, convexe vers 1' extérieur, de manière â épouser une zone correspondante de l'élément support, le moyen amortisseur comportant une couche de matière viscoélastique fixée à une zone de l'élément support, et une pièce de contrainte rigide, en particulier métallique liée à la couche de matière viscoélastique.

De préférence le moyen amortisseur de vibrations est rapporté sur l'élément support ; la couche de matière viscoélastique peut être fixée par collage sur l'élément support, la pièce de contrainte rigide étant elle-même collée contre 1a couche de matière viscoélastique.

La moyen amortisseur est d'un poids relativement faible ; l'élément support peut être réalisé d'une seule pièce en conciliant résistance et légèreté.

Dans le cas d'un élément support réalisé en matériau composite, le moyen amortisseur peut être intégré dans la structure composite, la pièce de contrainte étant noyée dans la couche de matière viscoélastique.

Le moyen amortisseur peut être fixé en saillie, avantageusement sur la partie arrière de l'élément support, de préférence dans la zone médiane selon la longueur.

En variante, le moyen amortisseur peut être fixé sur un côté de l'élément support.

Dans le cas d'une fourche avant, qui comporte deux fourreaux reliés à un pivot par une tête de fourche et séparés par un espace pour le passage de la roue entre eux, la fourche comporte un moyen amortisseur pour chaque fourreau, de préférence fixé sur la partie arrière du fourreau, dans la zone médiane selon la longueur de ce fourreau.

Dans le cas de haubans arrière, un moyen amortisseur est fixé de préférence sur la partie arrière de chaque hauban dans la zone médiane selon la longueur de ce hauban.

Le moyen amortisseur peut avoir une longueur comprise entre 50 et 60 mm, avantageusement sensiblement égale à 55 mm.

L'épaisseur de la couche de matière viscoélastique peut être comprise entre 0.5 et 0.9 mm, avantageusement sensiblement égale à 0.7 mm.

L'épaisseur de la pièce de contrainte peut être comprise entre 0.8 et 1.2 mm, avantageusement sensiblement égale à 1 mm. De préférence, cette pièce ou plaque de contrainte est réalisée en alliage léger dur, notamment en alliage d'aluminium, de zinc et de magnésium.

L'invention est également relative à un moyen amortisseur de vibrations pour élément support de roue de bicyclette caractérisé par le fait que le moyen amortisseur présente une forme sensiblement en secteur cylindrique convexe-concave pour épouser une zone de l'élément support, et comprend une couche de matière viscoélastique et une pièce de contrainte rigide, en particulier métallique, collée contre une face de la couche de matière viscoélastique, ce moyen amortisseur étant agencé pour être fixé, notamment collé, par la face libre de sa couche de matière viscoélastique contre la surface de l'élément support de roue.

Il est ainsi possible d équiper une bicyclette déjà en service avec un tel moyen amortisseur.

L'invention consiste, mises à part les dispositions exposées ci-dessus, en un certain nombre d'autres dispositions dont il sera plus explicitement question ci-après à propos d'exemples de réalisation décrits en détail avec référence aux dessins ci-annexés, mais qui ne sont nullement limitatifs.

La figure 1 de ces dessins est une vue de côté d'une fourche avant de bicyclette selon l'invention.

La figure 2 est une vue suivant la flèche II de la figure 1.

La figure 3 montre à plus grande échelle, en coupe suivant la ligne III-III de Fig.2, le moyen amortisseur.

La figure 4 montre en perspective, de l'extérieur, le moyen amortisseur, et

La figure 5 est une vue partielle, de l'arrière, de la roue arrière d'une bicyclette et des haubans équipés de moyens amortisseurs.

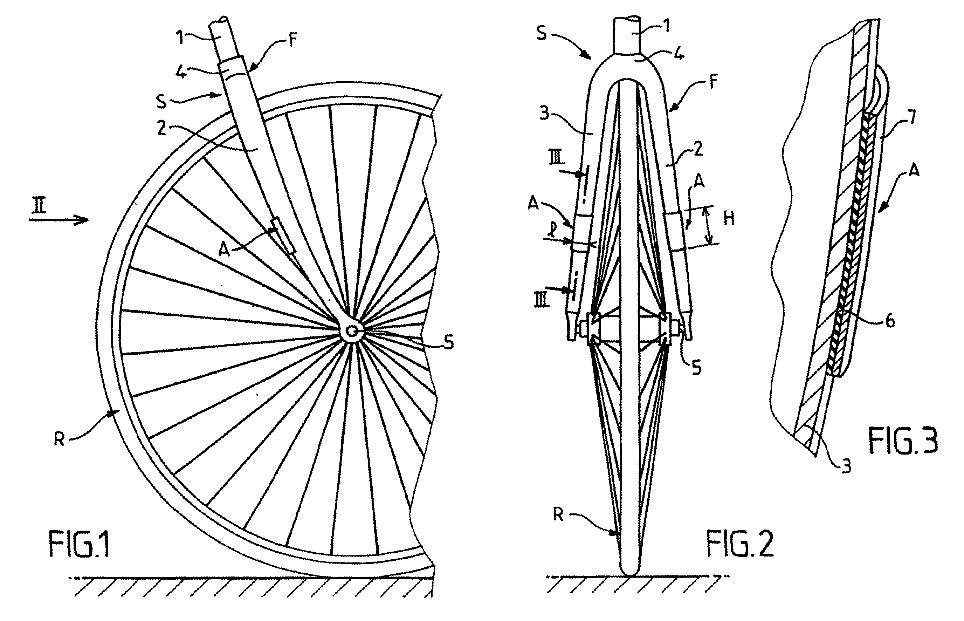

En se reportant aux Figs. 1 et 2 des dessins, on peut voir un élément support S de roue de bicyclette, constitué par une fourche avant F comportant un pivot de direction 1 solidaire, vers le bas, de deux fourreaux 2, 3 reliés au pivot par une tête de fourche 4. Les fourreaux 2 et 3 sont séparés par un espace permettant le passage d'une roue R entre eux. Cette roue est supportée par un axe 5 monté aux extrémités inférieures des fourreaux 2, 3.

Au moins un moyen amortisseur A est rapporté sur l'élément S. Le moyen amortisseur A est avantageusement fixé en saillie sur la partie arrière de chaque fourreau 2, 3, dans la zone médiane selon la longueur du fourreau.

La fourche F peut être réalisée en matériau composite, au moins pour les fourreaux 2 et 3. Bien entendu, la fourche F (et plus généralement l'élément support) peut être réalisée en tout type de matière, en particulier en métal, tel qu'alliage léger ou acier.

Le moyen amortisseur A comporte une couche 6 de matière viscoélastique, notamment matière élastomère, propre à dissiper l'énergie de déformation par cisaillement de la matière. La couche 6 est collée contre la surface arrière du fourreau correspondant 2, 3 sensiblement au milieu de la longueur ( hauteur) de ce fourreau.

Une pièce de contrainte rigide 7, en forme de plaque cintrée, est collée contre la face de la couche 6 éloigné du fourreau. La plaque de contrainte 7 est de préférence métallique en particulier en alliage léger dur, notamment alliage d'aluminium, de zinc et de magnésium. En variante, la pièce de contrainte 7 peut être constituée de plusieurs éléments séparés, par exemple sous forme de plaques élémentaires ou de tiges.

La largeur 1 du moyen amortisseur A peut être sensiblement égale à l'épaisseur hors tout du fourreau de telle sorte que le moyen amortisseur A peut être collé contre la tranche arrière du fourreau sans déborder latéralement.

Cette largeur 1 peut être comprise entre 12 et 18 mm, avantageusement sensiblement égale à 15 mm. La longueur H du moyen amortisseur peut être comprise entre 50 et 60 mm, avantageusement sensiblement égale à 55 mm.

L'épaisseur de la couche 6 de matière élastomère peut être comprise entre 0.5 et 0.9 mm, et est avantageusement sensiblement égale à 0.7 mm.

L'épaisseur de la plaque de contrainte 7 peut être comprise entre 0.8 et 1.2 mm, avantageusement sensiblement égale à 1 mm.

L'implantation du moyen amortisseur A dans la zone définie ( c'est-à-dire à l'arrière et au milieu de chaque fourreau ) est avantageuse pour obtenir un amortissement sensible des vibrations et une réduction des déplacements, aussi bien suivant une direction parallèle à l'axe 5 que suivant une direction horizontale orthogonale à l'axe 5 .

Cependant le moyen amortisseur A peut être installé en un autre endroit, par exemple plus haut ou plus bas, non seulement sur la tranche arrière mais aussi sur la tranche avant de l'élément support, ou sur un côté de l'élément support.

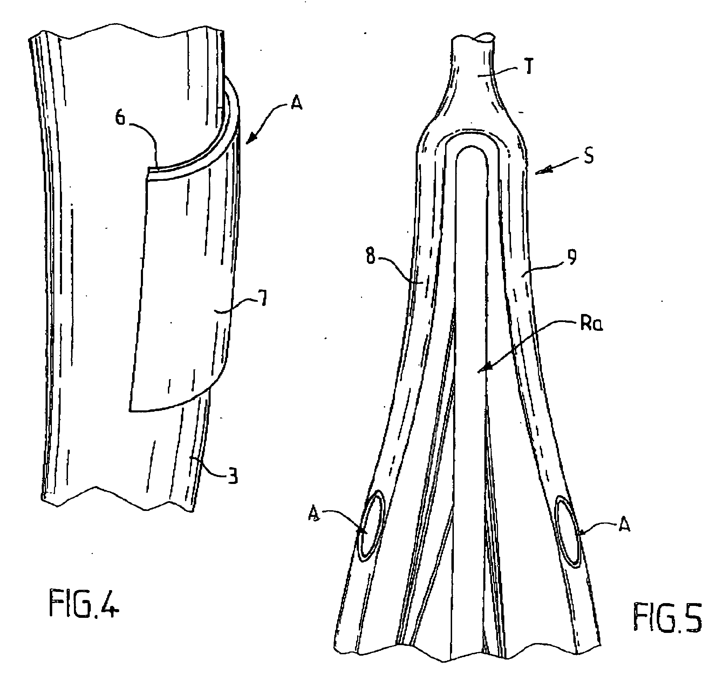

Comme visible d'après Figs. 3 et 4, le moyen amortisseur A peut avoir sensiblement la forme d'un secteur cylindrique, concave vers l'intérieur, convexe vers l'extérieur, de manière à épouser une zone correspondante du fourreau 2 ou 3. La pièce rigide 7 est cintrée suivant la forme souhaitée et la couche 6 adopte cette forme lors de son collage contre la pièce 7.

La figure 5 montre l'arrière de haubans 8, 9 supports d'une roue arrière Ra. Les haubans 8,9 sont reliés rigidement en partie haute entre eux et au tube de selle T. Un moyen amortisseur de vibrations A est collé à l'arrière contre chaque hauban, sensiblement à mi-hauteur.

Lorsque l'élément support est réalisé en matériau composite, il est possible d'intégrer le moyen amortisseur à l'intérieur même de la structure composite; la pièce de contrainte est alors noyée dans la couche de matière viscoélastique, elle-même incorporée à la structure composite. Il peut en résulter une surépaisseur locale prévue de préférence dans le volume creux intérieur des fourreaux 2 et 3.

Quel que soit le mode de réalisation, les vibrations sont amorties par dissipation d'énergie dans la couche viscoélastique 6 dont une face est solidaire d'une partie de l'élément support et dont l'autre face est solidaire de la pièce 7 de contrainte, qui peut osciller par inertie.

La solution de l'invention permet une absorption des vibrations, sans préjudice sensible de poids. Elle s'applique à tous types de bicyclette: course, cyclo-touriste, VTT, ou autres.

Cette solution est d'une mise en oeuvre facile, en particulier sur des fourches déjà existantes non équipées.

## Revendications

1. Elément support de roue de bicyclette **caractérisé par le fait qu'**il comporte un moyen amortisseur de vibrations (A) ayant une forme sensiblement en secteur cylindrique, concave vers l'intérieur, convexe vers l'extérieur, de manière à épouser une zone correspondante de l'élément support, le moyen amortisseur comportant une couche de matière viscoélastique (6) fixée à une zone de l'élément support (S), et une pièce de contrainte (7) rigide liée à la couche de matière viscoélastique.

2. Elément support de roue de bicyclette selon la revendication 1, **caractérisé par le fait que** le moyen amortisseur de vibrations (A) est rapporté sur l'élément support de roue.

3. Elément support de roue de bicyclette selon la revendication 2, **caractérisé par le fait que** la couche de matière viscoélastique (6) est fixée par coulage sur l'élément support (S), la pièce de contrainte rigide (7) étant elle-même collée contre la couche de matière viscoélastique (6).

4. Elément support de roue de bicyclette selon la revendication 2 ou 3, **caractérisé par le fait que** le moyen amortisseur (A) est fixé en saillie sur la partie arrière de l'élément support (S).

5. Elément support de roue de bicyclette selon l'une des revendications précédentes, **caractérisé par le fait que** le moyen amortisseur (A) est fixé dans la zone médiane selon la longueur de l'élément support.

6. Elément support de roue de bicyclette selon l'une des revendications précédentes, **caractérisé par le fait que** la plaque de contrainte rigide (7) est métallique.

7. Elément support de roue de bicyclette selon la revendication 6, **caractérisé par le fait que** la plaque de contrainte rigide (7) est en alliage léger dur, tel qu'un alliage d'aluminium, de zinc et de magnésium.

8. Fourche avant de bicyclette, constituant un élément support de roue selon l'une des revendications précédentes, comportant deux fourreaux (2,3) reliés à un pivot par une tête de fourche et séparés par un espace pour le passage de la roue entre eux, **caractérisée par le fait qu'**elle comporte un moyen amortisseur de vibrations (A) pour chaque fourreau (2,3), chaque moyen amortisseur (A) comportant une couche de matière viscoélastique (6) fixée à une zone du fourreau (2,3), et une pièce de contrainte (7) rigide liée à la couche de matière viscoélastique.

9. Fourche avant de bicyclette selon la revendication 8, **caractérisée par le fait que** chaque moyen amortisseur de vibrations (A) est rapporté à l'extérieur sur un fourreau (2,3).

10. Fourche avant de bicyclette selon la revendication 9, **caractérisée par le fait qu'**un moyen amortisseur de vibrations (A) est fixé sur la partie arrière de chaque fourreau (2,3) dans la zone médiane selon la longueur de ce fourreau.

11. Hauban arrière de bicyclette, constituant un élément support de roue selon l'une des revendications 1 à 7, **caractérisé par le fait qu'**un moyen amortisseur (A) est rapporté et fixé sur la partie arrière du hauban (8,9) ce moyen amortisseur (A) comportant une couche de matière viscoélastique (6) fixée contre une zone du fourreau (2,3), et une pièce de contrainte (7) rigide fixée contre la couche de matière viscoélastique.

## Claims

1. Bicycle wheel support element, **characterized in that** it comprises a vibration-damping means (A) having a shape that is substantially in a cylindrical sector, inwardly concave, outwardly convex, so as to closely follow a corresponding zone of the support element, the damping means comprising a layer of viscoelastic material (6) attached to a zone of the support element (S) and a rigid stress part (7) attached to the layer of viscoelastic material.

2. Bicycle wheel support element according to Claim 1, **characterized in that** the vibration-damping means (A) is fitted to the wheel support element.

3. Bicycle wheel support element according to Claim 2, **characterized in that** the layer of viscoelastic material (6) is attached by bonding to the support element (*S*), the rigid stress part (7) itself being bonded against the layer of viscoelastic material (6).

4. Bicycle wheel support element according to Claim 2 or 3, **characterized in that** the damping means (A) is attached as a protrusion to the rear portion of the support element (*S*).

5. Bicycle wheel support element according to one of the preceding claims, **characterized in that** the damping means (A) is attached in the mid-zone along the length of the support element.

6. Bicycle wheel support element according to one of the preceding claims, **characterized in that** the rigid stress plate (7) is metallic.

7. Bicycle wheel support element according to Claim 6, **characterized in that** the rigid stress plate (7) is made of hard light alloy, such as an aluminium, zinc and magnesium alloy.

8. Bicycle front fork, forming a wheel support element according to one of the preceding claims, comprising two sliders (2, 3) connected to a pivot by a fork crown and separated by a space for the wheel to pass between them, **characterized in that** it comprises a vibration-damping means (A) for each slider (2, 3), each damping means (A) comprising a layer of viscoelastic material (6) attached to a zone of the slider (2, 3), and a rigid stress part (7) connected to the layer of viscoelastic material.

9. Bicycle front fork according to Claim 8, **characterized in that** each vibration-damping means (A) is fitted on the outside to a slider (2, 3).

10. Bicycle front fork according to Claim 9, **characterized in that** a vibration-damping means (A) is attached to the rear portion of each slider (2, 3) in the mid-zone along the length of this slider.

11. Bicycle rear stay, forming a wheel support element according to one of Claims 1 to 7, **characterized in that** a damping means (A) is fitted and attached to the rear portion of the stay (8, 9), this damping means (A) comprising a layer of viscoelastic material (6) attached against a zone of the slider (2, 3), and a rigid stress part (7) attached against the layer of viscoelastic material.

## Patentansprüche

1. Stützelement für ein Rad eines Fahrrads, **dadurch gekennzeichnet, dass** es eine Vibrationsdämpfungseinrichtung (A) aufweist, deren Form im Wesentlichen einen zylindrischen Querschnitt hat, welcher nach innen konkav, nach außen konvex ist, so dass er sich an eine entsprechende Zone des Stützelements anschmiegt, wobei die Dämpfungseinrichtung eine Schicht (6) aus viskoelastischem Material, die an einer Zone des Stützelementes (S) befestigt ist, und ein starres Halteteil (7) aufweist, das mit der Schicht aus viskoelastischem Material verbunden ist.

2. Stützelement für ein Rad eines Fahrrads nach Anspruch 1, **dadurch gekennzeichnet, dass** die Vibrationsdämpfungseinrichtung (A) an das Radstützelement angesetzt ist.

3. Stützelement für ein Rad eines Fahrrads nach Anspruch 2, **dadurch gekennzeichnet, dass** die Schicht (6) aus viskoelastischem Material durch Kleben an dem Stützelement (S) angebracht ist, wobei das starre Halteteil (7) seinerseits auf die Schicht (6) aus viskoelastischem Material geklebt ist.

4. Stützelement für ein Rad eines Fahrrads nach Anspruch 2 oder 3, **dadurch gekennzeichnet, dass** die Dämpfungseinrichtung (A) von dem hinteren Teil des Stützelements (S) abstehend angebracht ist.

5. Stützelement für ein Rad eines Fahrrads nach einem der vorhergehenden Ansprüche, **dadurch gekennzeichnet, dass** die Dämpfungseinrichtung (A) in der Mittelzone in Längsrichtung des Stützelements angebracht ist.

6. Stützelement für ein Rad eines Fahrrads nach einem der vorhergehenden Ansprüche, **dadurch gekennzeichnet, dass** die starre Halteplatte (7) aus Metall besteht.

7. Stützelement für ein Rad eines Fahrrads nach Anspruch 6, **dadurch gekennzeichnet, dass** die starre Halteplatte (7) aus einer harten leichten Legierung besteht, wie einer Legierung aus Aluminium, Zink und Magnesium.

8. Vordere Fahrradgabel, welche ein Radstützelement nach einem der vorhergehenden Ansprüche bildet, mit zwei Schenkeln (2, 3), die über einen Gabelkopf mit einem Drehzapfen verbunden und durch einen Raum für den Durchtritt des Rades zwischen ihnen voneinander beabstandet sind, **dadurch gekennzeichnet, dass** sie eine Vibrationsdämpfungseinrichtung (A) für jeden Schenkel (2, 3) aufweist, wobei jede Dämpfungseinrichtung (A) eine Schicht (6) aus viskoelastischem Material aufweist, welche an einer Zone des Schenkels (2, 3) angebracht ist, und ein starres Halteteil (7) aufweist, das mit der Schicht aus viskoelastischem Material verbunden ist.

9. Vordere Fahrradgabel nach Anspruch 8, **dadurch gekennzeichnet, dass** jede Vibrationsdämpfungseinrichtung (A) außen an einen Schenkel (2, 3) angesetzt ist.

10. Vordere Fahrradgabel nach Anspruch 9, **dadurch gekennzeichnet, dass** eine Vibrationsdämpfungseinrichtung (A) an dem hinteren Teil jedes Schenkels (2, 3) in der Mittelzone in Längsrichtung des Schenkels befestigt ist.

11. Hintere Fahrradsattelstrebe, welche ein Radstützelement nach einem der Ansprüche 1 bis 7 bildet, **dadurch gekennzeichnet, dass** eine Dämpfungseinrichtung (A) an den hinteren Teil der Sattelstrebe (8, 9) angesetzt und befestigt ist, wobei die Dämpfungseinrichtung (A) eine Schicht (6) aus viskoelastischem Material, die an einer Zone des Schenkels (2, 3) angebracht ist, und ein starres Halteteil (7) aufweist, das an der Schicht aus viskoelastischem Material befestigt ist.
